## Europäisches Patentamt

## European Patent Office

## Office européen des brevets

(11) Veröffentlichungsnummer: **0 158 001**
**B1**

(12) **EUROPÄISCHE PATENTSCHRIFT**

(45) Veröffentlichungstag der Patentschrift:
**15.07.87**

(21) Anmeldenummer: **85100198.2**

(22) Anmeldetag: **10.01.85**

(51) Int. Cl.⁴: **E 21 B 47/08,** G 01 B 7/28

(54) Messgerät zur Bestimmung des Profils von Gesteinsbohrlöchern.

(30) Priorität: **12.01.84 DE 3400834**

(43) Veröffentlichungstag der Anmeldung:
**16.10.85 Patentblatt 85/42**

(45) Bekanntmachung des Hinweises auf die Patenterteilung:
**15.07.87 Patentblatt 87/29**

(84) Benannte Vertragsstaaten:
**BE FR GB NL SE**

(56) Entgegenhaltungen:
**US - A - 3 470 739**

**MACHINERY AND PRODUCTION ENGINEERING, Band 108, Januar 1966, Seiten 143,144, Burgess Hill, US; R. BARBOUR: "Instrument for the precision measurement of contoured bores"**

(73) Patentinhaber: **Kernforschungsanlage Jülich Gesellschaft mit beschränkter Haftung, Postfach 1913, D-5170 Jülich 1 (DE)**

(72) Erfinder: **Kreutz, Ferdinand, Victor-Goliancz-Strasse 4, D-5170 Jülich (DE)**
Erfinder: **Keck, Jürgen, Kapuzinerstrasse 16, D-5170 Jülich (DE)**
Erfinder: **Bölingen, Johann, Nizzaallee 39, D-5100 Aachen (DE)**
Erfinder: **Wetzler, Herbert, Flemingstraat 1, Brunsum (NL)**

## Beschreibung

Die Erfindung bezieht sich auf ein Messgerät zu Bestimmung des Profils von Gesteinsbohrlöchern, mit zwei durch ein Abstandsteil miteinander verbundenen, axial voneinander beabstandeten Zentriereinrichtungen sowie einem um die Längsachse des Abstandsteiles drehbaren, radial verschwenkbaren und mit seiner Spitze an die Bohrlochwand anlegbaren Messarm, wobei der jeweilige Bohrlochdurchmesser durch einen dem Messarm zugeordneten induktiven oder kapazitiven elektrischen Wegaufnehmer zu ermitteln ist.

Wie sich gezeigt hat, treten bei Bohrlöchern in geologischen Formationen im Laufe der Zeit Änderungen des Durchmessers auf, u.a. auch solche, die zu Abweichungen von der Kreisform des Bohrloches und damit von dessen Profil führen. Insbesondere ist bei grosskalibrischen Bohrungen in Salzbergwerken eine allmähliche Veränderung des Profils festzustellen. Die Kenntnis des Ausmasses dieser Veränderung ist dabei für in solchen Bohrungen eingelagerte Proben, beispielsweise radioaktive Abfälle, von Bedeutung.

Bekannt ist es, in Verbindung mit dem Vermessen von Bohrlöchern Geräte mit Messarmen einzusetzen, die mit induktiven oder kapazitiven Wegaufnehmern gekoppelt sind. Insbesondere aus der US-A-4289025 ist ein Gerät bekannt, das nicht nur zur Untersuchung von Lagerstätten sondern auch zum Ermitteln von Bochlochdurchmessern eingesetzt werden kann.

Dieses bekannte Gerät weist Zentriereinrichtungen, einen Messarm sowie elektrische Einrichtungen auf. Darüber hinaus ist aus der US-A-3348314 ein Gerät zum Vermessen von Bohrlöchern bekannt, bei dem teleskopierbare Messarme vorgesehen sind.

Ausgehend von dem aus der US-A-4289025 bekannten Gerät, ist es Aufgabe der Erfindung, ein Gerät zu schaffen, das sich durch eine besonders kompakte Bauweise auszeichnet.

Diese Aufgabe wird gemäss der Erfindung dadurch gelöst, dass der Messarm aus axial elastisch gegeneinander verschiebbaren Längsteilen besteht, mit denen jeweils ein entsprechendes Teil des induktiven oder kapazitiven elektrischen Wegaufnehmers direkt verbunden ist, wobei die gegenseitige axiale Verschiebung der beiden Längsteile des Messarms das Mass für den jeweiligen Bohrlochdurchmesser ist.

Zum Einsatz des Gerätes gemäss der Erfindung wird dieses in das Bohrloch abgesenkt und am Messort mittels der Zentriereinrichtungen fixiert. Dazu ist es zweckmässig, dass die Zentriereinrichtungen als Dreibein-Zentriereinrichtungen ausgebildet sind und dass ein elektrischer, hydraulischer oder pneumatischer Antrieb zum Verstellen der Beine der beiden Dreibein-Zentriereinrichtungen vorgesehen ist. Zweckmässig ist ferner, dass jeweils die drei Beine der Zentriereinrichtungen über eine Zwangskopplung miteinander in Verbindung stehen, wodurch erreicht wird, dass die jeweils zusammengehörenden Beine der Einrichtungen gleichzeitig um den gleichen Betrag ausgefahren werden.

Um beim Absenken des Gerätes in das Bohrloch auch Engstellen passieren zu können, ist es zweckmässig, dass für die Verkürzung oder Verlängerung des Messarmes ein elektrischer, hydraulischer oder pneumatischer Stellantrieb vorgesehen ist. Mit Hilfe dieses Stellantriebs wird der Messarm vor dem Absenken des Geräts in das Bohrloch verkürzt und am Messort soweit wieder ausgefahren, dass er die Bohrlochwand berührt und unter elastischer Spannung steht.

Zur Bestimmung des Profils wird der Messarm, der an seinem der Bohrlochwand zugewandten Ende zum Abtasten derselben zweckmässigerweise eine Rolle aufweist, um das Abstandsstück geschwenkt. Hierzu ist ein weiterer elektrisch, hydraulisch oder pneumatisch betriebener Steilantrieb vorgesehen. Aus den ermittelten Durchmesserwerten kann der Querschnitt des Bohrlochs an der Messstelle bestimmt werden.

Das Messsignal des Wegaufnehmers kann während der Bewegung des Messarms kontinuierlich auf einem Schreiber aufgezeichnet werden.

Um eine digitale Registrierung der Messergebnisse längs des Umlaufs vornehmen zu können, ist es ferner zweckmässig, dass der Stellantrieb für das Schwenken des Messarms bestimmte Rastpositionen aufweist, in die der Messarm ein- und ausfahrbar ist.

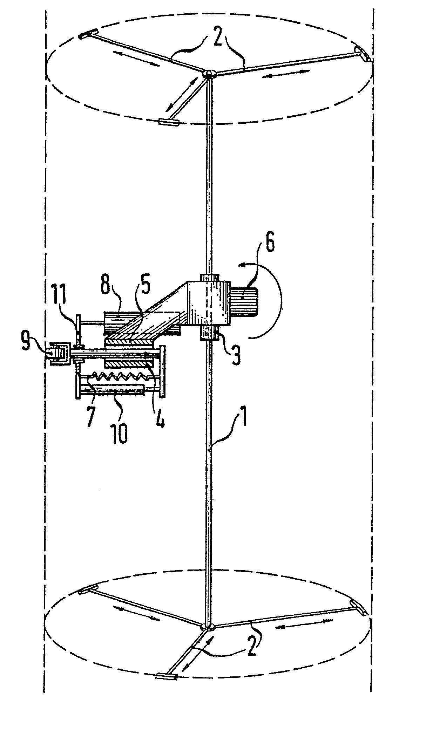

In der Zeichnung ist eine Ausführungsform des Messgerätes gemäss der Erfindung schematisch dargestellt und wird nachfolgend näher erläutert:

Das Gerät weist zwei über ein Abstandsteil 1 verbundene Dreibein-Zentriereinrichtungen 2 auf. Das Abstandsteil 1 ist als Mittelachse des Gerätes ausgebildet. Die Beine der Zentriereinrichtungen sind zum Verspannen des Messgeräts am Messort in ihrer Länge veränderbar. Durch eine in der Zeichnung nicht dargestellte Zwangskopplung wird erreicht, dass jeweils die drei Beine der Zentriereinrichtungen um den gleichen Betrag ausgefahren werden, wodurch eine genaue Zentrierung der Dreibeinführungen ermöglicht wird. Die Fernbedienung erfolgt dabei über einen in der Zeichnung nicht dargestellten pneumatischen, hydraulischen oder elektrischen Antrieb.

Zwischen den beiden Zentriereinrichtungen 2 ist an einer Führung 3 am Abstandsteil 1 ein Messarm 4, 11 angebracht, der mittels des Stellmotors 6 um das Abstandsteil 1 schwenkbar ist.

Der in seiner Länge veränderbare Messarm besteht aus den gegeneinander verschiebbaren Längsteilen 4 und 11. Längsteil 4 ist rohrförmig ausgebildet, in Längsteil 11 gelagert und in der Führung 5 geführt. Durch die Feder 7 wird das Längsteil 4, an dessen äusserem Ende eine Rolle 9 angebracht ist, nach aussen gezogen. Rolle 9 dient zum Abtasten der Wandung des Bohrlochs (schraffierte Linie).

Das Längsteil 11 kann mittels des Stellmotors 8 aus- bzw. eingefahren werden, wodurch auch das Längsteil 4, wenn es nicht bereits die Bohrlochwand erreicht hat, aus- bzw. eingefahren wird.

Zur Messung der Längenänderung des Messarms während des Messvorganges, also zur Messung der gegenseitigen Relativbewegung der beiden Längsteile 4 und 11 ist ein Wegaufnehmer 10 vorgesehen, der an den beiden Längsteilen befestigt ist.

Zum Einsatz des Messgerats gemäss der Erfindung wird dieses — mit verkürzten Beinen der Zentriereinrichtungen und verkürztem Messarm — in das Borhloch abgesenkt, wozu zweckmässigerweise am Messgerät eine Halterung vorgesehen ist, in die beispielsweise eine Kette oder ein Seil, an dem das Messgerät hängt, eingreift.

## Patentansprüche

1. Messgerät zur Bestimmung des Profils von Gesteinsbohrlöchern, mit zwei durch ein Abstandsteil (1) miteinander verbundenen, axial voneinander beabstandeten Zentriereinrichtungen (2) sowie einem um die Längsachse des Abstandsteiles (1) drehbaren, radial verschwenkbaren und mit seiner Spitze an die Bohrlochwand anlegbaren Messarm, wobei der jeweilige Bohrlochdurchmesser durch einen dem Messarm zugeordneten induktiven oder kapazitiven elektrischen Wegaufnehmer (10) zu ermitteln ist, dadurch gekennzeichnet, dass der Messarm aus axial eslastisch gegeneinander verschiebbaren Längsteilen (4, 11) besteht, mit denen jeweils ein entsprechendes Teil des induktiven oder kapazitiven elektrischen Wegaufnehmers (10) direkt verbunden ist, wobei die gegenseitige axiale Verschiebung der beiden Längsteile (4, 11) des Messarms das Mass für den jeweiligen Bohrlochdurchmesser ist.

2. Messgerät nach Anspruch 1 dadruch gekennzeichnet, dass für die Verkürzung oder Verlängerung des Messarmes ein elektrischer, hydraulischer oder pneumatischer Stellantrieb (8) vorgesehen ist.

3. Messgerät nach Anspruch 1, dadurch gekennzeichnet, dass am Ende des Messarms zum Abtasten der Bohrlochwand eine Rolle (9) angebracht ist.

4. Messgerät nach einem der vorhergehenden Ansprüche, dadurch gekennzeichnet, dass zum Schwenken des Messarms ein elektrischer, hydraulischer oder pneumatischer Stellantrieb (6) vorgesehen ist.

5. Messgerät nach Anspruch 4, dadurch gekennzeichnet, dass der Stellantrieb (6) bestimmte Rastpositionen aufweist.

6. Messgerät nach Anspruch 5, dadurch gekennzeichnet, dass der Messarm in jede Rastposition ein- und ausfahrbar ist.

## Claims

1. Gauge for determining the profile of boreholes in rock, with two axially spaced-apart centring devices (2) connected to one another by a spacer element (1), also with a radially pivotable measuring arm which is rotatable about the longitudinal axis of the spacer element (1) and is adapted to have its tip placed against the borehole wall, the particular borehole diameter in each case being ascertainable by an inductive or capacitive electrical travel distance pickup (10) associated with the measuring arm, characterised in that the measuring arm comprises longitudinal elements (4, 11) which are displaceable relatively to one another elastically and axially, and with each of which there is directly connected a respective corresponding part of the inductive or capacitive electrical travel distance pickup (10), the axial displacement relatively to one another of the two longitudinal elements (4, 11) of the measuring arm being the measure for the particular borehole diameter concerned.

2. Gauge according to claim 1, characterised in that an electrical, hydraulic, or pneumatic positioning drive (8) is provided for shortening or lengthening the measuring arm.

3. Gauge according to claim 1, characterised in that a roller (9) is arranged on the end of the measuring arm for sensing the borehole wall.

4. Gauge according to one of the preceding claims, characterised in that an electrical, hydraulic or pneumatic positioning drive (6) is provided for moving the measuring arm pivotably.

5. Gauge according to claim 4, characterised in that the positioning drive (6) has specific detent positions.

6. Gauge according to claim 5, characterised in that the measuring arm can be made to travel into and out of each detent position.

## Revendications

1. Appareil de mesure pour déterminer le profil d'un trou foré dans la roche, comprenant deux dispositifs de centrage (2), reliés entre eux par une entretoise (1) et à distance axialement l'un de l'autre, ainsi qu'un bras de mesure qui peut tourner autour de l'axe longitudinal de l'entretoise (1), qui peut basculer radialement et dont l'extrémité libre peut être appliquée à la paroi du trou foré, le diamètre du trou foré étant déterminé par un capteur électrique de déplacement fonctionnant par voie inductive ou capacitive et associé au bras de mesure, caractérisé en ce que le bras de mesure est constitué de parties oblongues (4, 11) qui peuvent se déplacer de manière élastique axialement l'une par rapport à l'autre et à chacune desquelles est reliée directement une partie correspondante du capteur électrique de déplacement (10) fonctionnant par voie inductive ou capacitive, le déplacement axial mutuel des deux parties oblongues (4, 11) du bras de mesure représentant la mesure du diamètre du trou foré.

2. Appareil de mesure suivant la revendication 1, caractérisé en ce qu'il est prévu un servomoteur (8) électrique, hydraulique ou pneumatique pour raccourcir ou pour rallonger le bras de mesure.

3. Appareil de mesure suivant la revendication 1, caractérisé en ce qu'une roulette (9) est fixée à l'extrémité du bras de mesure pour balayer la paroi du trou foré.

4. Appareil de mesure suivant l'une des revendications précédentes, caractérisé en ce qu'il est prévu un servomoteur (6) électrique, hydraulique ou pneumatique pour faire tourner l'appareil de mesure.

5. Appareil de mesure suivant la revendication 4, caractérisé en ce que le servomoteur (6) comporte des positions d'encliquetage définies.

6. Appareil de mesure suivant la revendication 5, caractérisé en ce que le bras de mesure peut rentrer et peut se déployer dans chaque position d'encliquetage.